# EUROPÄISCHE PATENTSCHRIFT

(11) **EP 2 993 006 B1**
(45) Veröffentlichungstag und Bekanntmachung des Hinweises auf die Patenterteilung: **22.11.2017**
(21) Anmeldenummer: 15179915.2
(22) Anmeldetag: 06.08.2015
(51) Int. Cl.: B28B 11/14, B23D 57/00, B28D 1/08, B26D 5/02, B26D 5/08, B26D 7/20

(54) **VERFAHREN UND VORRICHTUNG ZUR HERSTELLUNG VON DÄMMPLATTEN NACH DER POREN- ODER SCHAUMBETONTECHNOLOGIE SOWIE SCHNEIDEINRICHTUNG ZUM SCHNEIDEN VON ERHÄRTETEN BLÖCKEN DAFÜR**
METHOD AND DEVICE FOR PRODUCING INSULATION PANELS BASED ON PORE OR FOAM CONCRETE TECHNOLOGY AND CUTTING DEVICE FOR CUTTING HARDENED BLOCKS FOR SAME
PROCEDE ET DISPOSITIF DE FABRICATION DE PLAQUES D'ISOLATION SELON LA TECHNOLOGIE DE BETON MOUSSE OU POREUX ET DISPOSITIF CORRESPONDANT DE DECOUPE DE BLOCS DURCIS

(30) Priorität: 12.08.2014 DE 102014011912
(43) Veröffentlichungstag der Anmeldung: 09.03.2016
(73) Patentinhaber: Xella Baustoffe GmbH, 47259 Duisburg (DE)
(72) Erfinder: Kochan, Jörg, 06333 Wiederstedt (DE); Schweiger, Hans-Peter, 92533 Wernberg (DE); Naumann, Roger, 63825 Westerngrund (DE); Rohlf, Josef, 45721 Haltern (DE)
(74) Vertreter: Patent- und Rechtsanwälte Dr. Solf & Zapf

(56) Entgegenhaltungen:
- EP-A1- 0 827 819
- EP-A2- 0 673 733
- DE-A1-102007 017 485
- DE-A1-102008 055 740
- DE-A1-102010 023 726
- GB-A- 683 421
- JP-A- S 521 786
- JP-A- H05 337 925
- US-A- 4 646 602

## Beschreibung

Die vorliegende Erfindung betrifft ein Verfahren und eine Vorrichtung zur Herstellung von Dämmplatten nach der Poren- oder Schaumbetontechnologie sowie eine Schneideinrichtung zum Schneiden von erhärteten Blöcken in die Dämmplatten dafür.

Nach der Porenbetontechnologie hergestellte Dämmplatten bestehen aus hydrothermal gehärtetem, porosiertem Calciumsilikathydratmaterial. Dieses wird hergestellt aus wässrigen Mischungen aus mindestens einem mineralischen Bindemittel, welches mindestens eine im Hydrothermalprozess reaktionsfähige CaO-Komponente, z.B. Zement oder Branntkalk oder Kalkhydrat, und mindestens eine im Hydrothermalprozess reaktionsfähige SiO₂-Komponente, z.B. Quarzmehl oder Flugasche, enthält, einem Treibmittel, insbesondere Aluminiumpulver- und/oder -paste, sowie gegebenenfalls, insbesondere inerten, Zusatzstoffen. Außerdem kann die wässrige Mischung zumindest eine Gesteinskörnung (Zuschlagstoff) und/oder übliche Zusatzmittel sowie eine Calciumsulfat-Komponente enthalten. Die wässrige Mischung wird in Gießformen gegossen, auftreiben und ansteifen gelassen. Nach dem Ansteifen wird der grünfeste Kuchen aus der Gießform entnommen und in der Regel in grüne Formkörper geschnitten. Das Schneiden erfolgt üblicherweise mittels Schneiddrähten, welche durch den Kuchen durchgezogen werden bzw. durch welche der Kuchen durchgeschoben wird. Der Kuchen wird dabei sowohl längs- als auch quergeschnitten. Die grünen Formkörper werden dann einer Dampfhärtung unterzogen.

Für die Herstellung von Dämmplatten nach der Schaumbetontechnologie wird anstelle des Treibmittels vorgefertigter Schaum untergemischt und der Treibprozess entfällt.

Poren- bzw. Schaumbetonplatten bzw. Poren- bzw. Schaumbetonformkörper sind Platten aus Poren- und Schaumbetonmaterial. Unbewehrte Poren- bzw. Schaumbetonformkörper werden hauptsächlich als Mauersteine eingesetzt. Sie werden in Abhängigkeit von den Fertigungstoleranzen auch als Poren- oder Schaumbetonplansteine- oder -blöcke bezeichnet. Die nach der Poren- oder Schaumbetontechnologie hergestellten Dämmplatten unterscheiden sich von den Poren- bzw. Schaumbetonplatten vor allem hinsichtlich Rohdichte, Festigkeit und Wärmeleitfähigkeit.

Erhärtetes bzw. dampfgehärtetes, nach der Poren- oder Schaumbetontechnologie hergestelltes Dämmplattenmaterial besteht im Wesentlichen aus einem Feststoffsteggerüst aus Calciumsilikathydratphasen (CSH-Phasen), Restquarzkörnern, gegebenenfalls den inerten Zusatzstoffen und/oder der Gesteinskörnung und weiteren Nebenbestandteilen, wie z.B. Anhydrit. Die Restquarzkörner, die inerten Zusatzstoffe und die Gesteinskörnung sind in die CSH-Phasen eingebettet. Das Feststoffsteggerüst weist Stege auf, die die durch die Porosierung oder die Schaumzugabe künstlich erzeugten Poren (=Makroporen) umgibt. Außerdem weist das Feststoffsteggerüst Mikroporen auf, die in die CSH-Phasen eingebettet sind bzw. in diesen verteilt sind. Die Mikroporen sind Bestandteil des Feststoffsteggerüsts. Die CSH-Phasen des Feststoffsteggerüsts fungieren somit als Bindephase im Feststoffsteggerüst. Sie sind größtenteils kryptokristallin, in der Regel handelt es sich um CSH(I) und hauptsächlich um 11 Å-Tobermorit.

Aus dem Stand der Technik sind zahlreiche Verfahren bekannt, Porenbetonplatten herzustellen, wobei der grünfeste bzw. schneidfeste Porenbetonkuchen vor dem Härten in einzelne, plastische bzw. grünfeste Porenbetonplatten geschnitten wird. Gattungsgemäße Verfahren offenbaren z.B. die DE 900 189, die EP 0 280 350 B1 und die DE 10 2008 055 740 A1. Bei einigen der bekannten Verfahren liegen die Schnittflächen der geschnittenen Porenbetonplatten beim Härten aufeinander. Dadurch besteht die Gefahr, dass die Porenbetonplatten mit ihren Schnittflächen beim Härten aneinander "backen" und nach dem Härten mechanisch durch auseinander Ziehen getrennt werden müssen. Dabei kommt es immer wieder zu Kantenbrüchen und/oder die Ecken werden beschädigt. Dies ist insbesondere bei Porenbetonplatten mit geringer Rohdichte der Fall.

Zudem ist an sich das Schneiden von grünfestem Kuchen mit geringer Rohdichte aufgrund des hohen Anteils an Poren und der damit verbundenen geringeren Festigkeit oft schwierig.

Bei dem Verfahren gemäß der EP 0 280 350 B1 wird der grünfeste, aus der Gießform entnommene Porenbetonkuchen durch eine Schneidvorrichtung durchgefahren, die einen Schneidrahmen mit darin eingespannten, sich vertikal erstreckenden Schneiddrähten aufweist. Die Schneiddrähte sind zur Erzeugung einer glatten Schnittfläche in ihre Längsrichtung oszillierend antreibbar. Der Porenbetonkuchen wird der Schneidvorrichtung auf einem Tragrahmen mit Querträgern zugeführt, wobei auf den Querträgern vertikal nach oben abstehende Stifte vorgesehen sind und zwischen den Stiften lose Längsstäbe angeordnet sind, auf denen der Porenbetonkuchen mit seiner Unterseite aufliegt. Die Längsstäbe stehen dabei hochkant auf ihren Schmalseiten. Zum Längsschneiden wird der Tragrahmen abgesenkt und der Block nur noch auf den Längsstäben aufliegend durch die Vorrichtung durch gefahren, wobei die Schneiddrähte in den Zwischenräumen zwischen den Längsstäben durchgeführt werden. Nach dem Schneiden wird der geschnittene Porenbetonkuchen mit den Längsstäben wieder auf einem Tragrahmen positioniert und mit diesem und den Längsstäben liegend im Autoklaven dampfgehärtet. Vorteilhaft ist hierbei, dass aufgrund der mit hoher Frequenz oszillierenden Drähte sehr glatte, sich längs erstreckende Schnittflächen erzielt werden können, die auch nicht wieder beim Härten verkleben, da die Schnittflächen beim Härten nicht aufeinander liegen.

Sollen die Porenbetonkuchen vor dem Längsschneiden gemäß der EP 0 280 350 B1 quer geschnitten werden, wird der Porenbetonkuchen aus der Form mittels einer geeigneten Greifvorrichtung heraus gehoben und auf einem Schneidrost abgelegt. Über dem Schneidrost werden vorher horizontale, sich in eine Querrichtung des Porenbetonkuchens erstreckende Schneiddrähte gespannt. Die Schneiddrähte werden anschließend von unten nach oben durch den Porenbetonkuchen durchgezogen. Danach werden die entstandenen Schneidspalte geschlossen, indem die einzelnen erzeugten Porenbetonformkörper mittels Stoßen zusammen geschoben werden. Dies ist notwendig, um zu verhindern, dass beim anschließenden Längsschneiden aufgrund der Spalten keine Ecken ausreißen. Infolgedessen besteht die Gefahr, dass die sich quer erstreckenden Schnittflächen beim Härten miteinander verkleben. Des Weiteren ist es auch bekannt, den erhärteten Porenbetonkuchen in einzelne Formkörper zu schneiden. Aus der DE 10 2010 023 726 A1 ist eine sandwichartige Bauplatte bekannt, die eine innere, nach der Porenbetontechnologie hergestellte Dämmplatte und zwei äußere Porenbetonplatten aufweist. Die innere Dämmplatte weist eine geringere Rohdichte auf als die beiden äußeren Porenbetonplatten. Die sandwichartige Bauplatte wird hergestellt, indem zwischen mehrere bereits erhärtete innere Dämmplatten eine Poren- oder Schaumbetonfrischmasse eingegossen wird. Die Frischmasse wird gegebenenfalls Auftreiben und Ansteifen gelassen und anschließend die Gießform in den Autoklaven verfahren. Vor dem Autoklavieren kann der Kuchen, welcher die beiden bereits erhärteten Dämmplatten und die angesteifte Frischmasse enthält mittels Schneiddrähten oder Messerleisten geschnitten werden. Alternativ dazu kann die Aufteilung in die einzelnen Bauplatten auch nach dem Autoklavieren erfolgen.

JP H05 337925 offenbart eine Schneideinrichtung gemäß dem Oberbegriff des Anspruchs 1 und ein Verfahren zum Schneiden eines gehärteten Dämmmaterialblocks in mehrere Dämmplatten. Aufgabe der vorliegenden Erfindung ist die Bereitstellung eines Verfahrens zur Herstellung von Dämmplatten nach der Poren- oder Schaumbetontechnologie, das einfach und kostengünstig ist, sowie eine hohe Qualität der Dämmplatten bei gleichzeitig geringem Ausschuss gewährleistet.

Des Weiteren soll eine Vorrichtung zur Herstellung von Dämmplatten für das Verfahren bereitgestellt werden.

Weitere Aufgabe ist die Bereitstellung einer Schneideinrichtung zum Schneiden von erhärteten nach der Poren- oder Schaumbetontechnologie hergestellten Dämmmaterialblöcken in einzelne Dämmplatten, mit der das Schneiden einfach und kostengünstig sowie mit hoher Genauigkeit möglich ist.

Diese Aufgaben werden durch eine Schneideinrichtung mit den Merkmalen von Anspruch 1, ein Verfahren mit den Merkmalen von Anspruch 10 und eine Vorrichtung mit den Merkmalen von Anspruch 14 gelöst. Vorteilhafte Weiterbildungen der Erfindung sind in den sich jeweils anschließenden Unteransprüchen gekennzeichnet.

Im Folgenden wird die Erfindung anhand einer Zeichnung näher erläutert. Es zeigen:
- Figur 1:: Schematisch eine Seitenansicht der erfindungsgemäßen Schneideinrichtung mit einem erhärteten Dämmmaterialblock vor dem Schneiden
- Figur 2:: Schematisch eine Seitenansicht der erfindungsgemäßen Schneideinrichtung mit einem erhärteten Dämmmaterialblock nach dem Schneiden
- Figur 3:: Schematisch eine Draufsicht auf die erfindungsgemäße Schneideinrichtung ohne eine Schiebebühne mit einem erhärteten Dämmmaterialblock vor dem Schneiden
- Figur 4:: Schematisch eine Draufsicht auf die erfindungsgemäße Schneideinrichtung ohne eine Schiebebühne mit einzelnen geschnittenen Dämmplatten

Die erfindungsgemäße Schneideinrichtung 1 weist einen linear hin- und her verfahrbaren Schneidtisch 2 zur Aufnahme eines zu schneidenden, gehärteten Dämmmaterialblocks 3 und einen Schneidrahmen 4 mit zumindest einem, vorzugsweise mehreren, darin eingespannten Schneiddraht/Schneiddrähten 5 auf.

Der Dämmmaterialblock 3 ist vorzugsweise quaderförmig ausgebildet und weist eine ebene bzw. ebenflächige, insbesondere horizontale, Blockunterseite bzw. Blockauflagefläche 6, eine dazu parallele Blockoberseite 7, zwei sich gegenüberliegende, ebene bzw. ebenflächige, zu der Blockunterseite 6 senkrechte, insbesondere vertikale, Blockseitenflächen 8 und zwei zu den Blockseitenflächen 8 und der Blockauflagefläche 6 senkrechte, insbesondere vertikale, Blockstirnflächen 9 auf. Der Dämmmaterialblock 3 weist zudem eine Längserstreckung in eine horizontale Blocklängsrichtung 3a auf. Außerdem weist der Dämmmaterialblock 3 eine, insbesondere horizontale, zur Blocklängsrichtung 3a senkrechte Blockquerrichtung 3b bzw. Blockbreitenrichtung 3b und eine zur Blocklängsrichtung 3a und zur Blockquerrichtung 3b senkrechte, insbesondere vertikale, Blockhöhenrichtung 3c auf. Die Blockauflagefläche 6 und die Blockoberseite 7 sind dabei insbesondere senkrecht zur Blockhöhenrichtung 3c. Die beiden Blockseitenflächen 8 sind vorzugsweise senkrecht zur Blockquerrichtung 3b und die beiden Blockstirnflächen 9 sind vorzugsweise senkrecht zur Blocklängsrichtung 3a.

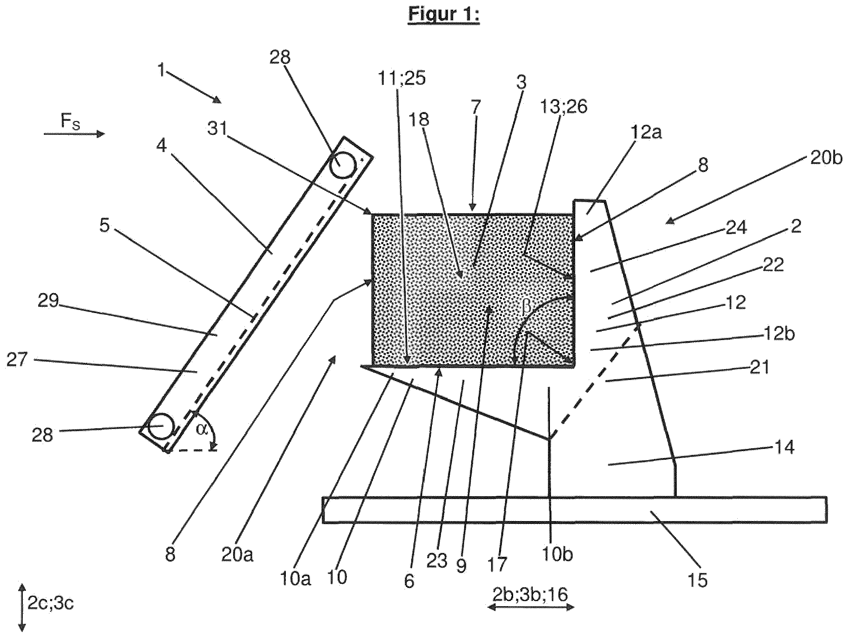

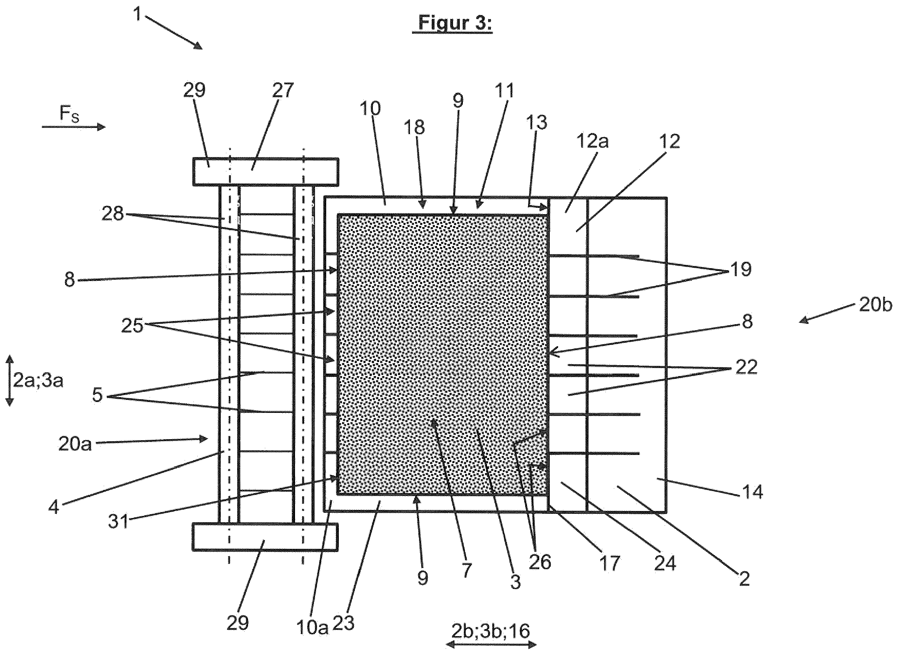

Der Schneidtisch 2 weist eine Tischplatte 10 mit einer, insbesondere horizontalen, Tischauflagefläche 11, ein Stützelement bzw. eine Lehne 12 mit einer zur Tischauflagefläche 11 senkrechten, insbesondere vertikalen, Tischanlage- bzw. Tischstützfläche 13, und einen Tischfuß 14 auf. Die Tischauflagefläche 11 ist der Lehne 12 zugewandt und die Tischanlagefläche 13 ist der Tischplatte 10 zugewandt. Zudem weist der Schneidtisch 2 eine horizontale Tischlängsrichtung 2a, eine dazu senkrechte, horizontale Tischquerrichtung 2b und eine vertikale Tischhöhenrichtung 2c auf. Dabei ist die Tischauflagefläche 11 vorzugsweise senkrecht zur Tischhöhenrichtung 2c und die Tischanlagefläche 13 ist vorzugsweise senkrecht zur Tischquerrichtung 2b. Des Weiteren weist der Schneidtisch 2 in Tischquerrichtung 2b gesehen eine erste Tischseite 20a und eine zweite Tischseite 20b auf. Die erste Tischseite 20a ist in einer Ausgangsstellung vor dem Schneiden (Fig. 1 und 3) dem Schneidrahmen 4 zugewandt. Die zweite Tischseite 20b ist vor dem Schneiden dem Schneidrahmen 4 abgewandt. Des Weiteren ist ein erstes, freies Tischplattenende 10a an der ersten Tischseite 20a angeordnet.

Der Tischfuß 14 dient zur Lagerung des Schneidtisches 2 auf einem Fundament, z.B. einer Schiebebühne, einem Verfahrtisch oder einem Schlitten 15. Mittels des Schlittens 15 ist der Schneidtisch 2 in eine horizontale Schneidrichtung 16 linear hin- und her verschieblich auf dem jeweiligen Untergrund gelagert. Die Schneidrichtung 16 ist dabei parallel zur Tischquerrichtung 2b. Die Schneideinrichtung 1 weist zudem entsprechende Antriebsmittel auf, mit denen der Schneidtisch 2 in die Schneidrichtung 16 hin- und her bzw. oszillierend translatorisch antreibbar in Verbindung steht.

Sowohl die Tischplatte 10 als auch die Lehne 12 schließen sich an den Tischfuß 14 an und erstrecken sich von diesem weg. Die Tischplatte 10 erstreckt sich im Wesentlichen in Tischquerrichtung 2b von dem Tischfuß 14 weg zum Schneidrahmen 4 hin. Die Tischplatte 10 ist somit frei kragend, insbesondere über dem Schlitten 15, ausgebildet. Insbesondere weist die Tischplatte 10 das erste, freie Tischplattenende 10a und ein diesem in Tischquerrichtung 2b gegenüberliegendes zweites, angebundenes Tischplattenende 10b auf. Die Lehne 12 erstreckt sich im Wesentlichen in vertikaler Richtung nach oben von dem Tischfuß 14 weg. Die Lehne 12 weist ebenfalls ein erstes, freies Lehnenende 12a und ein diesem in Tischhöhenrichtung 2c gegenüberliegendes zweites, angebundenes Lehnenende 12b auf. Die Tischplatte 10 und die Lehne 12 gehen jeweils an ihrem angebundenen Ende 10b;12b ineinander über. Die Tischauflagefläche 11 und die Tischanlagefläche 13 schließen sich dabei aneinander an und gehen in einer, insbesondere horizontalen, sich parallel zur Tischlängsrichtung 2a erstreckenden, Eckkante 17 ineinander über.

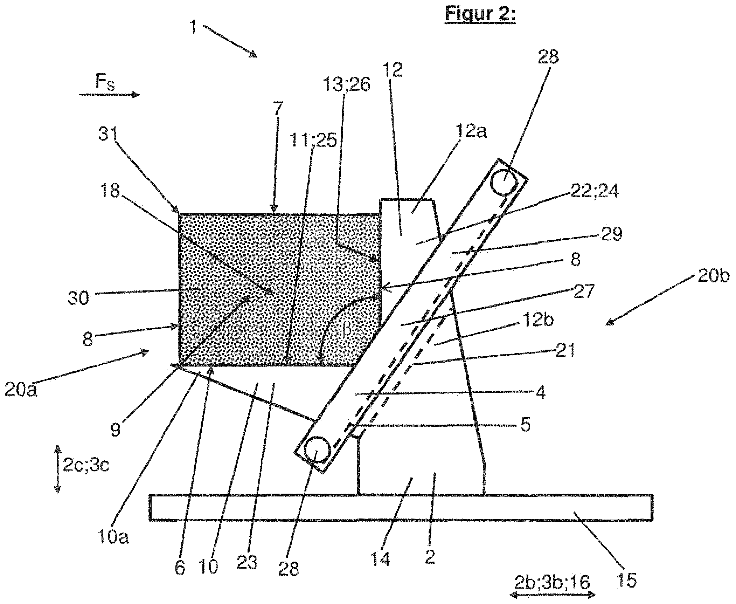

Infolgedessen wird zwischen der Tischplatte 10, insbesondere der Tischauflagefläche 11, und der Lehne 12, insbesondere der Tischanlagefläche 13, eine maulartige Aufnahmeöffnung 18 zur Aufnahme des Porenbetonblocks 3 gebildet. Die Aufnahmeöffnung 18 ist in einer Seitenansicht der Schneideinrichtung 2 (Fig. 1 und 2) gesehen L-förmig ausgebildet. Zudem ist die Aufnahmeöffnung 18 vor dem Schneiden (Fig. 1) zum Schneidrahmen 4 hin offen. Bzw. die Aufnahmeöffnung 18 ist zur ersten Tischseite 20a hin offen. Der Öffnungswinkel β der maulartigen Aufnahmeöffnung 18 beträgt vorzugsweise 90°.

Erfindungsgemäß weist der Schneidtisch 2 zudem mehrere, vertikale Drahtaufnahmeschlitze bzw. Drahtaufnahmenuten 19 zur Aufnahme jeweils eines Schneiddrahtes 5 während des Schneidens auf. Die Drahtaufnahmeschlitze 19 sind in Tischlängsrichtung 2a zueinander benachbart angeordnet. Zudem ist jeder Schneiddraht 5 in Schneidrichtung 16 gesehen fluchtend zu einem der Drahtaufnahmeschlitze 19 angeordnet, wobei aber auch mehr Drahtaufnahmeschlitze 19 als Schneiddrähte 5 vorhanden sein können. Die Drahtaufnahmeschlitze 19 weisen zudem eine flächenmäßige Erstreckung senkrecht zur Tischlängsrichtung 2a auf. Zudem erstrecken sich die Drahtaufnahmeschlitze 19 von der ersten Tischseite 20a gesehen in den Schneidtisch 2, insbesondere in die Tischplatte 10 und die Lehne 12, hinein. Das heißt, die Drahtaufnahmeschlitze 19 sind zur ersten Tischseite 20a hin offen. Die Drahtaufnahmeschlitze 19 weisen jeweils eine Schlitzendkante 21 auf, die sich von der ersten Tischseite 20a zur zweiten Tischseite 20b gesehen jeweils schräg nach oben durch den Schneidtisch 2 durch erstreckt. Dabei sind die Schlitzendkanten 21 senkrecht zur Tischlängsrichtung 2a. Vorzugsweise sind die Schlitzendkanten 21 parallel zu jeweils einem Schneiddraht 5. Zudem sind die Schlitzendkanten 21 vorzugsweise alle in Tischlängsrichtung 2a zueinander fluchtend angeordnet.

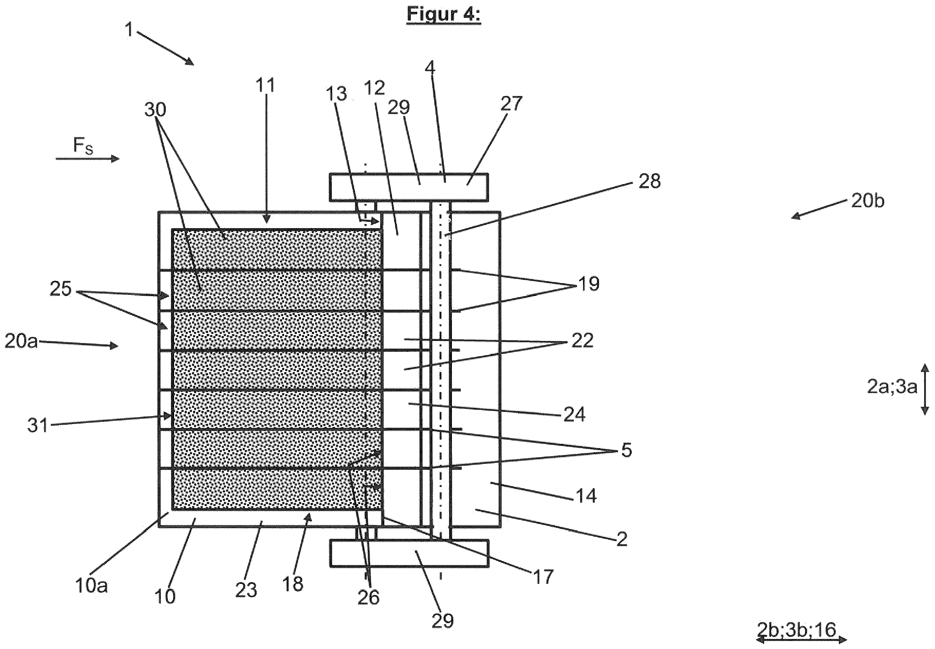

Die Drahtaufnahmeschlitze 19 teilen den Schneidtisch 2 in einzelne miteinander verbundene Winkelelemente 22, die in Tischlängsrichtung 2a zueinander benachbart sind. Die Winkelelemente 22 sind zudem jeweils durch einen Drahtaufnahmeschlitz 19 voneinander beabstandet. Die Winkelelemente 22 weisen jeweils einen Tragarm 23 und einen dazu abgewinkelten Stützarm 24 auf. Die zueinander benachbarten Tragarme 23 bilden die Tischplatte 10 und die zueinander benachbarten Stützarme 24 bilden die Lehne 12. Die Tragarme 23 weisen infolgedessen jeweils eine horizontale, dem jeweiligen Stützarm 24 zugewandte, Armauflagefläche 25 auf. Und die Stützarme 24 weisen jeweils eine vertikale, dem jeweiligen Tragarm 23 zugewandte Armanlagefläche 26 auf. Die Armauflagefläche 25 und die Armanlagefläche 26 eines Winkelelements 22 gehen dabei ineinander über. Die Armauflageflächen 25 der einzelnen Winkelelemente 22 sind zueinander koplanar und bilden alle zusammen die Tischauflagefläche 11. Und die Armanlageflächen 26 der einzelnen Winkelelemente 22 sind zueinander koplanar und bilden alle zusammen die Tischanlagefläche 13. Infolgedessen sind sowohl die Tischauflagefläche 11 als auch die Tischanlagefläche 13 und die Eckkante 17 durch die Drahtaufnahmeschlitze 19 unterbrochen. Der Schneidtisch 2 ist somit im Bereich der gesamten Tischauflagefläche 11 und der gesamten Tischanlagefläche 13 geschlitzt. Der Schneidtisch 2 ist erfindungsgemäß also kammartig ausgebildet (Fig. 3 und 4).

Die Breite der Drahtaufnahmeschlitze 19, also deren Erstreckung in Tischlängsrichtung 2a, ist dabei so bemessen, dass jeweils ein Schneiddraht 5 berührungslos durchgeführt werden kann. Die Breite der Drahtaufnahmeschlitze 19 ist also größer als die Dicke der Schneiddrähte. Vorzugsweise beträgt die Breite der Drahtaufnahmeschlitze 1-3 mm.

Der Schneidrahmen 4 weist wie bereits erläutert zumindest einen, vorzugsweise mehrere, Schneiddrähte 5 auf, die in ein quaderförmiges Rahmengestell 27 eingespannt sind. Das Rahmengestell 27 weist zweckmäßigerweise zwei sich horizontal und parallel zur Tischlängsrichtung 2a erstreckende Drahtspannwellen 28 und die beiden Drahtspannwellen 28 miteinander verbindende Balken 29 auf. Die Schneiddrähte 5 sind in an sich bekannter Weise zwischen der oberen und unteren Drahtspannwelle 28 eingespannt und an beiden befestigt. Zudem erstrecken sich die Schneiddrähte 5 senkrecht zur Tischlängsrichtung 2a. Dabei sind die Schneiddrähte 5 in Tischlängsrichtung 2a zueinander benachbart und fluchtend angeordnet.

Die beiden Balken 29 und infolgedessen auch die Schneiddrähte 5 sind außerdem vorzugsweise um eine zur Tischlängsrichtung 2a parallele Achse in Bezug zur Vertikalen geneigt. Dabei erstrecken sich die Schneiddrähte 5 von unten nach oben gesehen auf den Schneidtisch 2 zu. Vorzugsweise schließen die Schneiddrähte 5 mit der Horizontalen einen Winkel α ein, wobei vorzugsweise gilt: 30 ≤ α ≤ 80°, besonders bevorzugt 40 ≤ α 50°.

Vorzugsweise sind die Schneiddrähte 5 in einer zu ihrer Längserstreckung parallelen Richtung unverschieblich im Rahmengestell 27 eingespannt. Die Schneiddrähte 5 können aber auch in an sich bekannter Weise in einer zu ihrer Längserstreckung parallelen Richtung, insbesondere mit einer Frequenz von 150 bis 250 Hz, bevorzugt 190 bis 210 Hz oszillierend antreibbar sein. Der Hub der Schneiddrähte 5 beträgt dabei vorzugsweise 5 bis 30 mm. In diesem Fall sind zudem in an sich bekannter Weise vier Drahtspannwellen (nicht dargestellt) vorhanden, mittels denen die zueinander benachbarten Schneiddrähte 5 in gegenläufige Richtungen antreibbar sind.

Die Drahtspannung der Schneiddrähte 5 beträgt zudem vorzugsweise 1000 bis 2750 N/mm², besonders bevorzugt 1800 bis 2000 N/mm². Der Durchmesser der Schneiddrähte 5 beträgt vorzugsweise 0,4 bis 1,2 mm.

Der Abstand der zueinander benachbarten Schneiddrähte 5 voneinander entspricht zudem der gewünschten Dicke der herzustellenden Dämmplatten 30 (Fig. 2, 4). Der Abstand muss dabei nicht zwischen allen Schneiddrähten 5 gleich sein. Insbesondere beträgt der Abstand der zueinander benachbarten Schneiddrähte 5 20 oder 50 mm bzw. ein ganzzahliges Vielfaches davon. Gleiches gilt folglich für den Abstand der einzelnen zueinander benachbarten Drahtaufnahmeschlitze 19.

Im Folgenden wird das erfindungsgemäße Verfahren unter Verwendung der erfindungsgemäßen Vorrichtung und der erfindungsgemäßen Schneideinrichtung 1 näher erläutert:
Zunächst wird in an sich bekannter Weise ein Dämmmaterialkuchen durch Gießen von Dämmmaterialfrischmasse in eine nach oben offene Gießform (nicht dargestellt) hergestellt. Zur Herstellung eines Kuchens nach der Porenbetontechnologie wird dabei eine Frischmasse verwendet, die zumindest einen Treibporenbildner, insbesondere feinteiliges Aluminium z.B. in Form von Aluminiumpulver oder -paste, aufweist. Zur Herstellung eines Kuchens nach der Schaumbetontechnologie wird eine Frischmasse verwendet, die bereits zugemischte Luftporen enthält.

Nach dem Einfüllen der Frischmasse wird die Frischmasse zumeist für ungefähr 1 bis 5 h gegebenenfalls Gären bzw. Auftreiben und Ansteifen gelassen, bis die Frischmasse eine ausreichende Schneidfestigkeit erreicht hat und ein grüner bzw. grünfester Dämmmaterialkuchen entstanden ist. Dann wird der Dämmmaterialkuchen aus der Form entnommen oder die Gießformstirn- und - seitenwandungen werden weggeklappt und der Dämmmaterialkuchen dann im grünfesten, plastischen Zustand außenseitig, z.B. mittels Schneiddrähten oder Schneidmessern begradigt und auf ein vorbestimmtes Maß in Dämmmaterialblöcke 3 geschnitten.

Die bevorzugten Maße der Dämmmaterialblöcke 3 betragen:

| | | | | |
|---|---|---|---|---|
| | | | insbesondere | |
| Länge | 1200 bis 1800 | mm | 1270 bis 1570 | mm |
| Breite | 300 bis 450 | mm | 360 bis 400 | mm |
| Höhe | 500 bis 700 | mm | 600 bis 650 | mm |

Dann werden die Dämmmaterialblöcke in einem Autoklaven hydrothermal gehärtet.

Im Anschluss an die Autoklavenreise wird jeweils ein dampfgehärteter Dämmmaterialblock 3 mittels der erfindungsgemäßen Schneideinrichtung 1 in die einzelnen quaderförmigen Dämmplatten 30 geschnitten. Dazu wird der Block 3, z.B. mittels einer Hubeinrichtung auf die Tischauflagefläche 11 der Tischplatte 10 aufgelegt. Der zu schneidende Dämmmaterialblock 3 ist dann in der Aufnahmeöffnung 18 angeordnet. Dabei liegt der Block 3 mit seiner Blockauflagefläche 6 auf der Tischauflagefläche 11 auf. Zudem liegt der Block 3 mit seiner dem Schneidrahmen 4 abgewandten Blockseitenfläche 8 an der Tischanlagefläche 13 an und wird durch diese abgestützt. Die andere Blockseitenfläche 8 ist dem Schneidrahmen 4 zugewandt. Zudem ist die Blocklängsrichtung 3a parallel zur Tischlängsrichtung 2a, die Blockquerrichtung 3b ist parallel zur Tischquerrichtung 2b und die Blockhöhenrichtung 3c ist parallel zur Tischhöhenrichtung 2c.

Der Schneidrahmen 4 ist in seiner Ausgangsposition vor dem Schneiden zudem gegenüberliegend bzw. benachbart zur ersten Tischseite 20a angeordnet.

Zum Schneiden wird nun der Schneidtisch 2 mit dem darauf angeordneten Dämmmaterialblock 3 mittels der Tischantriebsmittel in Schneidrichtung 16 auf den Schneidrahmen 4 zu verfahren. Die Verfahrgeschwindigkeit beträgt vorzugsweise 0,5 bis 20 m/min. Die Schneiddrähte 5 dringen dabei nach einiger Zeit in den Dämmmaterialblock 3 ein und schneiden diesen in einzelne Dämmplatten 30. Aufgrund der Schrägstellung der Schneiddrähte 5 dringen diese zunächst an einer oberen Blockkante 31, welche durch die dem Schneidrahmen 4 zugewandte Blockseitenfläche 8 und die Blockoberseite 7 gebildet wird, in den Poren- oder Schaumbetonblock 3 ein. Dadurch wird ein ziehender Schnitt durchgeführt.

Gleichzeitig fahren die Schneiddrähte 5 auch jeweils in einen der Drahtaufnahmeschlitze 19 ein und werden durch diesen durchgeführt. Aufgrund der größeren Breite der Drahtaufnahmeschlitze 19 berühren die Schneiddrähte 5 dabei den Schneidtisch 2 nicht, so dass Reibung vermieden wird. Die obere Drahtspannwelle 28 fährt dabei oberhalb des Poren- oder Schaumbetonblocks 3 entlang und die untere Drahtspannwelle 28 fährt unterhalb der Tischplatte 10 entlang. Die beiden Balken 29 fahren außen an den Blockstirnflächen 9 vorbei.

Der Schneidtisch 2 wird so weit verfahren, bis die Schneiddrähte 5 den Dämmmaterialblock 3 vollständig durchfahren haben. Das heißt, zumindest so weit, bis die Schneiddrähte 5 die Eckkante 17 passiert haben, aber nicht unbedingt an den Schlitzendkanten 21 angelangt sind. Dann ist der Schneidvorgang beendet (Fig. 2 und 4). Beim Schneiden werden dabei Schnittfugen erzeugt, die senkrecht zur Blocklängsrichtung 2a sind. Der Dämmmaterialblock 3 wird also quergeschnitten. Die bevorzugten Maße der geschnittenen Dämmplatten 30 sind wie folgt:

| | | | | |
|---|---|---|---|---|
| | | | insbesondere | |
| Länge | 500 bis 700 | mm | 600 | mm |
| Breite | 300 bis 450 | mm | 390 | mm |
| Dicke | 30 bis 350 | mm | 50 bis 300 | mm |

Anschließend werden die geschnittenen Dämmplatten 30 von dem Schneidtisch 2 abgenommen und dann der Schneidtisch 2 wieder in seine Ausgangsposition zurück gefahren. Dies kann allerdings auch umgekehrt erfolgen. Ein neuer Schneidvorgang kann beginnen.

Die geschnittenen Dämmplatten 30 werden beispielsweise auf einem Förderer mit integrierter Absaugung weiter befördert, mittels dem verbleibender Säge- bzw. Schneidstaub abgesaugt wird.

Vorteil der erfindungsgemäßen Schneideinrichtung 1 und des erfindungsgemäßen Schneidverfahrens ist, dass nach der Poren- oder Schaumbetontechnologie hergestellte Dämmmaterialblöcke 3 kostengünstig und schnell geschnitten werden können. Des Weiteren ist es insbesondere möglich, Dämmmaterialblöcke 3 mit geringer Rohdichte zu schneiden. Vorzugsweise liegt die Trockenrohdichte gemäß DIN EN 772-13 der zu schneidenden Dämmmaterialblöcke 3 bei 70 bis 120 kg/m³, besonders bevorzugt bei 75 bis 100 kg/m³. Die größeren Blöcke lassen sich im Betrieb leichter handhaben als die dünneren Platten. So werden Beschädigungen und damit Ausschuss vermieden.

Das Schneiden von dampfgehärteten Dämmmaterialblöcken 3 mittels Schneiddrähten ist insbesondere aufgrund der L-förmigen Aufnahmeöffnung 18 mit der Tischanlagefläche 13 möglich. Dadurch können die Schneiddrähte 5 überhaupt erst durch den dampfgehärteten Dämmmaterialblock 3 durchgeschoben bzw. durchgedrückt werden. Denn, da die Tischanlagefläche 13 senkrecht zur Schneidrichtung 16 ist, wirkt sie als Widerlager für den Dämmmaterialblock 3. Auf den Dämmmaterialblock 3 wirkt beim Schneiden eine horizontale Schneidkraft F_{S}, welche den Dämmmaterialblock 3 wegdrücken würde. Die Tischanlagefläche 13 wirkt der Schneidkraft F_{S} entgegen, so dass der Dämmmaterialblock 3 beim Schneidvorgang nicht ausweichen kann.

Des Weiteren wird der Dämmmaterialblock 3 insbesondere auch am Ende des Schneidvorgangs, nämlich im Bereich seiner unteren, hinteren Blockkante 32, welche im Bereich der Eckkante 17 angeordnet ist, optimal unterstützt. Die untere, hintere Blockkante 32 wird durch die an der Lehne 12 anliegende Blockseitenfläche 8 und die Blockunterseite 7 gebildet. Durch diese erfindungsgemäße Unterstützung wird das Ausbrechen der Ecken der Dämmplatten 30 verhindert. Dabei liegt es auch im Rahmen der Erfindung, wenn sich die Lehne 12 nicht über die gesamte Höhe des Dämmmaterialblockes 3 erstreckt, auch wenn dies bevorzugt ist.

Die erfindungsgemäße Schneideinrichtung 1 kann zudem problemlos in bereits bestehende Vorrichtungen zur Herstellung von monolithischen Poren- oder Schaumbetonplatten integriert werden. Monolithisch meint dabei, dass die Platten nicht mehrschichtig, sondern einschichtig sind, und aus einem einzigen Material bestehen.

Des Weiteren ist die Handhabung der grünen Poren- oder Schaumbetonblöcke deutlich einfacher als wenn diese bereits im grünen Zustand in Platten geschnitten sind. Auch wird ein Verbacken der einzelnen Poren- oder Schaumbetonplatten miteinander und ein Umstürzen beim Autoklavieren vermieden. Dadurch wird deutlich weniger Ausschuss produziert.

Im Rahmen der Erfindung liegt es dabei selbstverständlich auch anstelle des Schneidtisches 2 oder zusätzlich, den Schneidrahmen 4 derart in Schneidrichtung 16 zu verfahren, dass die Schneiddrähte 5 in Schneidrichtung 16 durch den Dämmmaterialblock 3 durchgedrückt werden. Der Schneidtisch 2 und der Schneidrahmen 4 müssen nur mittels geeigneter Antriebsmittel in Schneidrichtung 16 hin- und her relativ zueinander antreibbar sein.

Außerdem können die Drahtaufnahmeschlitze 19 auch weiter in den Schneidtisch 2 hinein gehen als dargestellt, auch durch den gesamten Schneidtisch 2 samt Tischfuß 14 hindurch. Die Schlitzendkanten 21 können z.B. auch horizontal oder vertikal sein.

Des Weiteren liegt es im Rahmen der Erfindung, die einzelnen Winkelelemente 22 in Tischquerrichtung 2b zueinander verschieblich auszubilden und gegebenenfalls entsprechende Antriebsmittel zum Verfahren der Winkelelemente 22 in Tischquerrichtung 2b relativ zueinander vorzusehen. Dadurch könnten die Formate der Dämmplatten 30 einfach und stufenlos variiert werden.

## Patentansprüche

1. Schneideinrichtung (1) zum Schneiden eines dampfgehärteten, mittels Poren- oder Schaumbetontechnologie hergestellten, Dämmmaterialblocks (3) mit folgenden Abmessungen
| | | | | |
|---|---|---|---|---|
| | | | insbesondere | |
| Länge | 1200 bis 1800 | mm | 1270 bis 1570 | mm |
| Breite | 300 bis 450 | mm | 360 bis 400 | mm |
| Höhe | 500 bis 700 | mm | 600 bis 650 | mm |
in mehrere Dämmplatten (30) mit
a) einem Schneidrahmen (4) mit einem oder mehreren darin eingespannten Schneiddrähten (5),
b) einem Schneidtisch (2) zur Aufnahme des zu schneidenden Dämmmaterialblocks (3), wobei der Schneidtisch (2)
- eine Tischplatte (10) mit einer Tischauflagefläche (11) zur Auflage des zu schneidenden Dämmmaterialblocks (3) und
- eine von der Tischplatte (10) abstehende Lehne (12) mit einer Tischanlagefläche (13) zur Abstützung des auf der Tischauflagefläche (11) aufliegenden Dämmmaterialblocks (3) während des Schneidvorgangs, und
- mehrere Drahtaufnahmeschlitze (19), welche die Tischauflagefläche (11) und die Tischanlagefläche (13) unterbrechen und in welche die Schneiddrähte (5), während des Schneidvorgangs eindringen können,
aufweist,
c) Antriebsmitteln mit denen der Schneidtisch (2) und/oder der Schneidrahmen (4) in eine horizontale Schneidrichtung (16) relativ zueinander, insbesondere hin- und her, translatorisch antreibbar in Verbindung stehen,
**dadurch gekennzeichnet, dass** die Tischanlagefläche (13) und die Tischauflagefläche (11) zueinander senkrecht sind, sich aneinander anschließen, und in einer, sich insbesondere horizontal erstreckenden, Eckkante (17) ineinander übergehen, wobei die Drahtaufnahmeschlitze (19) die Tischauflagefläche (11), die Tischanlagefläche (13) und die Eckkante (17) unterbrechen, so dass der Schneidtisch (2) im Bereich der gesamten Tischauflagefläche (11) und der gesamten Tischanlagefläche (13) geschlitzt ist.

2. Schneideinrichtung (1) nach Anspruch 1,
**dadurch gekennzeichnet, dass**
zwischen der Tischplatte (10), insbesondere der Tischauflagefläche (11), und der Lehne (12), insbesondere der Tischanlagefläche (13), eine maulartige Aufnahmeöffnung (18) zur Aufnahme des Dämmmaterialblocks (3) gebildet wird,
wobei vorzugsweise die Tischanlagefläche (13) senkrecht zur Schneidrichtung (16) ist.

3. Schneideinrichtung (1) nach Anspruch 1 oder 2,
**dadurch gekennzeichnet, dass**
der Schneidtisch (2) eine horizontale Tischlängsrichtung (2a), eine dazu senkrechte, horizontale und zur Schneidrichtung (16) parallele, Tischquerrichtung (2b) und eine vertikale Tischhöhenrichtung (2c) aufweist, wobei die Tischauflagefläche (11) vorzugsweise senkrecht zur Tischhöhenrichtung (2c) und die Tischanlagefläche (13) vorzugsweise senkrecht zur Tischquerrichtung (2b) ist,
wobei vorzugsweise der Schneidtisch (2) in Tischquerrichtung (2b) gesehen eine erste Tischseite (20a) und eine zweite Tischseite (20b) aufweist, wobei in einer Ausgangsstellung des Schneidtisches (2) vor dem Schneiden die erste Tischseite (20a) dem Schneidrahmen (4) zugewandt ist und die zweite Tischseite (20b) dem Schneidrahmen (4) abgewandt ist,
wobei vorzugsweise die Aufnahmeöffnung (18) zur ersten Tischseite (20a) hin offen ist und insbesondere die Aufnahmeöffnung (18) in der Ausgangsstellung des Schneidtisches (2) vor dem Schneiden zum Schneidrahmen (4) hin offen ist,
wobei sich die Drahtaufnahmeschlitze (19) vorzugsweise von der ersten Tischseite (20a) her in den Schneidtisch (2), insbesondere in die Tischplatte (10) und die Lehne (12), hinein erstrecken.

4. Schneideinrichtung (1) nach Anspruch 3,
**dadurch gekennzeichnet, dass**
die Drahtaufnahmeschlitze (19) eine flächenmäßige Erstreckung senkrecht zur Tischlängsrichtung (2a) aufweisen, wobei die Drahtaufnahmeschlitze (19) in Tischlängsrichtung (2a) gesehen zueinander benachbart angeordnet sind.

5. Schneideinrichtung (1) nach einem der Ansprüche 1 bis 4,
**dadurch gekennzeichnet, dass**
die Drahtaufnahmeschlitze (19) jeweils eine Schlitzendkante (21) aufweisen, wobei die Schlitzendkanten (21) vorzugsweise senkrecht zur Tischlängsrichtung (2a) sind und sich die Drahtaufnahmeschlitze (19) insbesondere von der ersten Tischseite (20a) zur zweiten Tischseite (20b) gesehen jeweils schräg nach oben erstrecken,
und wobei die Schlitzendkanten (21) vorzugsweise parallel zu den Schneiddrähten (5) sind.

6. Schneideinrichtung (1) nach einem der Ansprüche 1 bis 5,
**dadurch gekennzeichnet, dass**
die Drahtaufnahmeschlitze (19) die Tischplatte (10) und die Lehne (13) in einzelne Winkelelemente (22) teilen, die in Tischlängsrichtung (2a) zueinander benachbart sind, wobei die Winkelelemente (22) jeweils einen Tragarm (23) und einen dazu abgewinkelten, mit dem Tragarm (23) fest verbundenen, Stützarm (24) aufweisen, wobei die zueinander benachbarten Tragarme (23) die Tischplatte (10) und die zueinander benachbarten Stützarme (24) die Lehne (12) bilden,
wobei vorzugsweise die Tragarme (23) jeweils eine horizontale, dem jeweiligen Stützarm (24) zugewandte, Armauflagefläche (25) aufweisen und die Stützarme (24) jeweils eine dem jeweiligen Tragarm (23) zugewandte Armanlagefläche (26) aufweisen, wobei die Armauflagefläche (25) und die Armanlagefläche (26) eines Winkelelements (22) ineinander übergehen und wobei die Armauflageflächen (25) der einzelnen Winkelelemente (22) alle zueinander koplanar sind und die Tischauflagefläche (11) bilden und die Armanlageflächen (26) der einzelnen Winkelelemente (22) zueinander koplanar sind und die Tischanlagefläche (13) bilden.

7. Schneideinrichtung (1) nach einem der Ansprüche 1 bis 6,
**dadurch gekennzeichnet, dass**
die Breite der Drahtaufnahmeschlitze (19) größer ist als die Dicke der Schneiddrähte, wobei die Breite der Drahtaufnahmeschlitze vorzugsweise 1-3 mm beträgt.

8. Schneideinrichtung (1) nach einem der Ansprüche 3 bis 7,
**dadurch gekennzeichnet, dass**
der Schneidrahmen (4) mehrere Schneiddrähte (5) aufweist, die in ein quaderförmiges Rahmengestell (27) eingespannt sind, wobei sich die Schneiddrähte (5) senkrecht zur Tischquerrichtung (2b) erstrecken, und wobei vorzugsweise die Schneiddrähte (5) um eine zur Schneidrichtung (16) senkrechte, horizontale Achse in Bezug zur Vertikalen geneigt sind, wobei sich die Schneiddrähte (5) vorzugsweise von unten nach oben gesehen auf den Schneidtisch (2) zu erstrecken und wobei die Schneiddrähte (5) insbesondere mit der Schneidrichtung (16) einen Winkel α einschließen, wobei gilt: 30 ≤ α ≤ 80°, bevorzugt 40 ≤ α ≤ 50°.

9. Schneideinrichtung nach einem der Ansprüche 1 bis 8,
**dadurch gekennzeichnet, dass**
der Schneidtisch (2) mit den Antriebsmitteln in die Schneidrichtung (16) hin- und her verschieblich antreibbar in Verbindung steht, wobei vorzugsweise der Schneidrahmen (4) unverschieblich ist.

10. Verfahren zum Schneiden eines gehärteten Dämmmaterialblocks (3) in mehrere Dämmplatten (30)
**dadurch gekennzeichnet, dass**
eine Schneideinrichtung (1) gemäß einem der Ansprüche 1 bis 9 verwendet wird.

11. Verfahren zur Herstellung von monolithischen Dämmplatten (30) nach der Poren- oder Schaumbetontechnologie mit folgenden Verfahrensschritten:
a) Gießen von Dämmmaterialfrischmasse in eine nach oben offene Gießform,
b) Ansteifen und, im Falle der Herstellung nach der Porenbetontechnologie, vorheriges Auftreiben lassen der Frischmasse zu einem schneidfesten, plastischen Dämmmaterialkuchen,
c) Schneiden des plastischen Dämmmaterialkuchens in einzelne Dämmmaterialblöcke (3),
d) Hydrothermales Härten der geschnittenen Dämmmaterialblöcke (3),
e) Schneiden der gehärteten Dämmmaterialblöcke (3) in einzelne Dämmplatten (30) gemäß Anspruch 10, wobei die Schneideinrichtung jeweils einen gehärteten Dämmmaterialblock (3) in mehrere Dämmplatten (30) schneidet.

12. Verfahren nach Anspruch 11,
**dadurch gekennzeichnet, dass**
der Dämmmaterialkuchen in quaderförmige Dämmmaterialblöcke (3) geschnitten wird, die jeweils eine ebenflächige Blockauflagefläche (6), eine dazu parallele Blockoberseite (7), zwei sich gegenüberliegende ebenflächige, zu der Blockauflagefläche (6) senkrechte Blockseitenflächen (8) und zwei zu den Blockseitenflächen (8) und der Blockauflagefläche (6) senkrechte Blockstirnflächen (9) aufweisen.

13. Verfahren nach Anspruch 11 oder 12,
**dadurch gekennzeichnet, dass**
der Dämmmaterialkuchen in quaderförmige Dämmmaterialblöcke (3) geschnitten wird, die jeweils eine Längserstreckung in eine horizontale Blocklängsrichtung (3a) sowie eine zur Blocklängsrichtung (3a) senkrechte Blockquerrichtung (3b) und eine zur Blocklängsrichtung (3a) und zur Blockquerrichtung (3b) senkrechte Blockhöhenrichtung (3c) aufweisen,
wobei die Dämmmaterialblöcke (3) vorzugsweise folgende Abmessungen aufweisen:
| | | | | |
|---|---|---|---|---|
| | | | insbesondere | |
| Länge | 1200 bis 1800 | mm | 1270 bis 1570 | mm |
| Breite | 300 bis 450 | mm | 360 bis 400 | mm |
| Höhe | 500 bis 700 | mm | 600 bis 650 | mm |
und wobei die Dämmmaterialblöcke (3) in quaderförmige Dämmmaterialplatten (30) geschnitten werden, die vorzugsweise folgende Abmessungen aufweisen:
| | | | | |
|---|---|---|---|---|
| | | | insbesondere | |
| Länge | 500 bis 700 | mm | 600 | mm |
| Breite | 300 bis 450 | mm | 390 | mm |
| Dicke | 30 bis 350 | mm | 50 bis 300 | mm |

14. Vorrichtung zur Herstellung von Dämmplatten (30) nach der Poren- oder Schaumbetontechnologie mittels des Verfahrens nach einem der vorhergehenden Ansprüche mit
a) einer Gießform zum Befüllen mit Dämmmaterialfrischmasse,
b) einer Schneideinrichtung zum Schneiden eines schneidfesten, plastischen Dämmmaterialkuchens in Dämmmaterialblöcke (3),
c) Mitteln zum hydrothermalen Härten der geschnittenen Dämmmaterialblöcke (3), insbesondere einem Autoklaven,
d) einer Schneideinrichtung nach einem der Ansprüche 1 bis 9 zum Schneiden jeweils eines gehärteten Dämmmaterialblocks (3) in mehrere Dämmplatten (30).

## Claims

1. Cutting device (1) for cutting a steam-hardened insulation material block (3), produced by means of porous or foam concrete technology, with the following dimensions
| | | |
|---|---|---|
| | | in particular |
| length | 1200 to 1800 mm | 1270 to 1570 mm |
| width | 300 to 450 mm | 360 to 400 mm |
| height | 500 to 700 mm | 600 to 650 mm |
in a plurality of insulation panels (30) with
a) a cutting frame (4) with one or more cutting wires (5) clamped therein,
b) a cutting table (2) for receiving the insulation material block (3) to be cut, wherein the cutting table (2) has
- a table top (10) with a table supporting surface (11) for supporting the insulation material block (3) to be cut and
- a backrest (12) projecting from the table top (10) and having a table bearing surface (13)for bearing the insulation material block (3) lying on the table supporting surface (11) during the cutting operation, and
- a plurality of wire receiving slots (19) which interrupt the table supporting surface (11) and the table bearing surface (13) and into which the cutting wires (5) can penetrate during the cutting operation,
c) drive means by which the cutting table (2) and/or the cutting frame (4) are connected in a translationally drivable manner relative to each other in a horizontal cutting direction (16), in particular to and fro,
**characterised in that**
the table bearing surface (13) and the table supporting surface (11) are perpendicular to each other, adjoin each other, and merge into each other in a, in particular horizontally extending, corner edge (17), wherein the wire receiving slots (19) interrupt the table supporting surface (11), the table bearing surface (13) and the corner edge (17), so that the cutting table (2) is slotted in the region of the entire table supporting surface (11) and of the entire table bearing surface (13).

2. Cutting device (1) according to claim 1,
**characterised in that**
between the table top (10), in particular the table supporting surface (11), and the backrest (12), in particular the table bearing surface (13), a jaw-like receiving opening (18) for receiving the insulation material block (3) is formed,
wherein preferably the table bearing surface (13) is perpendicular to the cutting direction (16).

3. Cutting device (1) according to claim 1 or 2,
**characterised in that**
the cutting table (2) has a horizontal table longitudinal direction (2a), a table transverse direction (2b) which is perpendicular thereto, horizontal and parallel to the cutting direction (16), and a vertical table height direction (2c), wherein the table supporting surface (11) is preferably perpendicular to the table height direction (2c) and the table bearing surface (13) is preferably perpendicular to the table transverse direction (2b),
wherein preferably the cutting table (2) has, seen in the table transverse direction (2b), a first table side (20a) and a second table side (20b), wherein, in an initial position of the cutting table (2) before the cutting, the first table side (20a) faces the cutting frame (4) and the second table side (20b) faces away from the cutting frame (4), wherein preferably the receiving opening (18) is open towards the first table side (20a) and in particular the receiving opening (18) is open, in the initial position of the cutting table (2), towards the cutting frame (4) before the cutting,
wherein the wire receiving slots (19) preferably extend from the first table side (20a) into the cutting table (2), in particular into the table top (10) and the backrest (12).

4. Cutting device (1) according to claim 3,
**characterised in that**
the wire receiving slots (19) have an areal extent perpendicular to the table longitudinal direction (2a), wherein the wire receiving slots (19), seen in the table longitudinal direction (2a), are arranged adjacent to one another.

5. Cutting device (1) according to one of claims 1 to 4,
**characterised in that**
the wire receiving slots (19) each have a slot end edge (21), wherein the slot end edges (21) are preferably perpendicular to the table longitudinal direction (2a) and the wire receiving slots (19), in particular seen from the first table side (20a) to the second table side (20b), each extend obliquely upwards,
and wherein the slot end edges (21) are preferably arranged parallel to the cutting wires (5).

6. Cutting device (1) according to one of claims 1 to 5,
**characterised in that**
the wire receiving slots (19) divide the table top (10) and the backrest (13) into individual angular elements (22) which are adjacent to each other in the table longitudinal direction (2a), wherein the angular elements (22) each have a carrying arm (23) and a bearing arm (24) angled off therefrom and fixedly connected to the carrying arm (23), wherein the mutually adjacent carrying arms (23) form the table top (10) and the mutually adjacent bearing arms (24) form the backrest (12), wherein preferably the carrying arms (23) each have a horizontal arm supporting surface (25) facing the respective bearing arm (24) and the bearing arms (24) each have an arm bearing surface (26) facing the respective carrying arm (23), wherein the arm supporting surface (25) and the arm bearing surface (26) of an angular element (22) merge into each other and wherein the arm supporting surfaces (25) of the individual angular elements (22) are all coplanar with each other and form the table supporting surface (11) and the arm bearing surfaces (26) of the individual angular elements (22) are coplanar with each other and form the table bearing surface (13).

7. Cutting device (1) according to one of claims 1 to 6,
**characterised in that**
the width of the wire receiving slots (19) is greater than the thickness of the cutting wires, wherein the width of the wire receiving slots is preferably 1-3 mm.

8. Cutting device (1) according to one of claims 3 to 7,
**characterised in that**
the cutting frame (4) has a plurality of cutting wires (5) which are clamped in an ashlar-shaped frame (27), wherein the cutting wires (5) extend perpendicular to the table transverse direction (2b),
and wherein preferably the cutting wires (5) are inclined with respect to the vertical about a horizontal axis perpendicular to the cutting direction (16), wherein the cutting wires (5), preferably seen from bottom to top, extend towards the cutting table (2) and wherein the cutting wires (5) enclose an angle α in particular with the cutting direction (16), where it holds that:
30 ≤ α ≤ ≤ 80°, preferably 40 ≤ α ≤ 50°.

9. Cutting device according to one of claims 1 to 8,
**characterised in that**
the cutting table (2) is connected to the drive means in a manner drivable displaceably to and fro in the cutting direction (16), wherein preferably the cutting frame (4) is non-displaceable.

10. Method for cutting a hardened insulation material block (3) into a plurality of insulation panels (30)
**characterised in that**
a cutting device (1) according to one of claims 1 to 9 is used.

11. Method for producing monolithic insulation panels (30) according to the porous or foam concrete technology having the following method steps:
a) pouring of insulation material fresh mass into an upwardly open casting mould,
b) stiffening and, in the case of the production according to the porous concrete technology, prior inflating of the fresh mass to form a cut-resistant, plastic insulation material cake,
c) cutting of the plastic insulation material cake into individual insulation material blocks (3),
d) hydrothermal hardening of the cut insulation material blocks (3),
e) cutting of the hardened insulation material blocks (3) into individual insulation panels (30) according to claim 10, wherein the cutting device in each case cuts a hardened insulation material block (3) into a plurality of insulation panels (30).

12. Method according to claim 11,
**characterised in that**
the insulation material cake is cut into rectangular parallelepiped-shaped insulation material blocks (3), which each have a planar block supporting surface (6), a block upper side (7) parallel thereto, two opposing planar block side surfaces (8) perpendicular to the block supporting surface (6) and two block end surfaces (9) perpendicular to the block side surfaces (8) and the block supporting surface (6).

13. Method according to claim 11 or 12,
**characterised in that**
the insulation material cake is cut into ashlar-shaped insulation material blocks (3), which each have a longitudinal extent in a horizontal block longitudinal direction (3a) and a block transverse direction (3b) perpendicular to the block longitudinal direction (3a) and a block height direction (3c) perpendicular to the block longitudinal direction (3a) and to the block transverse direction (3b),
wherein the insulation material blocks (3) preferably have the following dimensions:
| | | |
|---|---|---|
| | | in particular |
| length | 1200 to 1800 mm | 1270 to 1570 mm |
| width | 300 to 450 mm | 360 to 400 mm |
| height | 500 to 700 mm | 600 to 650 mm |
and wherein the insulation material blocks (3) are cut into ashlar-shaped insulation material panels (30), which preferably have the following dimensions:
| | | |
|---|---|---|
| | | in particular |
| length | 500 to 700 mm | 600 mm |
| width | 300 to 450 mm | 390 mm |
| thickness | 30 to 350 mm | 50 to 300 mm |

14. Apparatus for producing insulation panels (30) according to the porous or foam concrete technology by means of the method according to one of the preceding claims having
a) a casting mould for filling with insulation material fresh mass,
b) a cutting device for cutting a cut-resistant, plastic insulation material cake into insulation material blocks (3),
c) means for hydrothermal hardening of the cut insulation material blocks (3), in particular an autoclave,
d) a cutting device according to one of claims 1 to 9 for cutting in each case a hardened insulation material block (3) into a plurality of insulation panels (30).

## Revendications

1. Dispositif de coupe (1) pour la coupe d'un bloc de matériau isolant (3) durci à la vapeur, fabriqué à l'aide de la technologie du béton poreux ou mousse avec les dimensions suivantes
| | | | en particulier | |
|---|---|---|---|---|
| Longueur | 1200 à 1800 | mm | 1270 à 1570 | mm |
| Largeur | 300 à 450 | mm | 360 à 400 | mm |
| Hauteur | 500 à 700 | mm | 600 à 650 | mm |
en plusieurs plaques d'isolation (30) avec
a) un cadre de coupe (4) avec un ou plusieurs fils de coupe (5) serrés dans celui-ci,
b) une table de coupe (2) pour la réception du bloc de matériau isolant (3) à couper, dans lequel la table de coupe (2) présente
- une plaque de table (10) avec une surface de pose de table (11) pour la pose du bloc de matériau isolant (3) à couper et
- un dossier (12) dépassant de la plaque de table (10) avec une surface d'appui de table (13) pour l'appui du bloc de matériau isolant (3) reposant sur la surface de pose de table (11) pendant le processus de coupe, et
- plusieurs fentes de réception de fils (19) qui peuvent interrompre la surface de pose de table (11) et la surface d'appui de table (13) et dans lesquelles les fils de coupe (5) pendant le processus de coupe peuvent pénétrer,
comprenant,
c) des moyens d'entraînement avec lesquels la table de coupe (2) et/ou le cadre de coupe (4) sont en liaison de manière entraînable par translation dans un sens de coupe horizontal (16) l'un par rapport à l'autre, en particulier alternativement,
**caractérisé en ce que**
la surface d'appui de table (13) et la surface de pose de table (11) sont perpendiculaires l'une à l'autre, se raccordent l'une à l'autre, et dans une arête de coin (17), s'étendant en particulier horizontalement, passent l'une dans l'autre, dans lequel les fentes de réception de fils (19) interrompent la surface de pose de table (11), la surface d'appui de table (13) et l'arête de coin (17) de sorte que la table de coupe (2) soit fendue dans la zone de la surface de pose de table (11) entière et la surface d'appui de table (13) entière.

2. Dispositif de coupe (1) selon la revendication 1,
**caractérisé en ce que**
une ouverture de réception (18) de type mâchoire est formée pour la réception du bloc de matériau isolant (3) entre la plaque de table (10), en particulier la surface de pose de table (11), et le dossier (12), en particulier la surface d'appui de table (13),
dans lequel de préférence la surface d'appui de table (13) est perpendiculaire au sens de coupe (16).

3. Dispositif de coupe (1) selon la revendication 1 ou 2,
**caractérisé en ce que**
la table de coupe (2) présente un sens longitudinal de table (2a) horizontal, un sens transversal de table (2b) parallèle au sens de coupe (16) et horizontal, perpendiculaire à celui-ci et un sens de hauteur de table (2c) vertical, dans lequel la surface de pose de table (11) est de préférence perpendiculaire au sens de hauteur de table (2c) et la surface d'appui de table (13) est de préférence perpendiculaire au sens transversal de table (2b),
dans lequel de préférence la table de coupe (2) présente, vu dans le sens transversal de table (2b), un premier côté de table (20a) et un second côté de table (20b), dans lequel dans une position de départ de la table de coupe (2) avant la coupe, le premier côté de table (20a) est tourné vers le cadre de coupe (4) et le second côté de table (20b) est éloigné du cadre de coupe (4),
dans lequel de préférence l'ouverture de réception (18) est ouverte vers le premier côté de table (20a) et en particulier l'ouverture de réception (18) est ouverte dans la position de départ de la table de coupe (2) avant la coupe vers le cadre de coupe (4),
dans lequel les fentes de réception de fils (19) s'étendent de préférence depuis le premier côté de table (20a) dans la table de coupe (2), en particulier dans la plaque de table (10) et le dossier (12).

4. Dispositif de coupe (1) selon la revendication 3,
**caractérisé en ce que**
les fentes de réception de fils (19) présentent une étendue sur la surface perpendiculaire au sens longitudinal de table (2a), dans lequel les fentes de réception de fils (19) sont agencées vu dans le sens longitudinal de table (2a) de manière contiguë les unes aux autres.

5. Dispositif de coupe (1) selon l'une des revendications 1 à 4,
**caractérisé en ce que**
les fentes de réception de fils (19) présentent respectivement une arête terminale de fente (21), dans lequel les arêtes terminales de fente (21) sont de préférence perpendiculaires au sens longitudinal de table (2a) et les fentes de réception de fils (19) s'étendent vu en particulier du premier côté de table (20a) au second côté de table (20b) respectivement en biais vers le haut,
et dans lequel les arêtes terminales de fente (21) sont de préférence parallèles aux fils de coupe (5).

6. Dispositif de coupe (1) selon l'une des revendications 1 à 5,
**caractérisé en ce que**
les fentes de réception de fils (19) divisent la plaque de table (10) et le dossier (13) en éléments angulaires individuels (22) qui sont contigus les uns aux autres dans le sens longitudinal de table (2a), dans lequel les éléments angulaires (22) présentent respectivement un bras porteur (23) et un bras d'appui (24) coudé par rapport à celui-ci, relié fixement au bras porteur (23), dans lequel les bras porteurs contigus les uns aux autres (23) forment la plaque de table (10) et les bras d'appui (24) contigus les uns aux autres forment le dossier (12),
dans lequel de préférence les bras porteurs (23) présentent respectivement une surface de pose de bras (25) horizontale, tournée vers le bras d'appui (24) respectif et les bras d'appui (24) présentent respectivement une surface d'appui de bras (26) tournée vers le bras porteur (23) respectif, dans lequel la surface de pose de bras (25) et la surface d'appui de bras (26) d'un élément angulaire (22) passent l'une dans l'autre et dans lequel les surfaces de pose de bras (25) des éléments angulaires individuels (22) sont toutes coplanaires les unes aux autres et forment la surface de pose de table (11) et les surfaces d'appui de bras (26) des éléments angulaires individuels (22) sont coplanaires les unes aux autres et forment la surface d'appui de table (13).

7. Dispositif de coupe (1) selon l'une des revendications 1 à 6,
**caractérisé en ce que**
la largeur des fentes de réception de fils (19) est plus grande que l'épaisseur des fils de coupe, dans lequel la largeur des fentes de réception de fils s'élève de préférence de 1 à 3 mm.

8. Dispositif de coupe (1) selon l'une des revendications 3 à 7,
**caractérisé en ce que**
le cadre de coupe (4) présente plusieurs fils de coupe (5) qui sont serrés dans un bâti de cadre (27) parallélépipédique, dans lequel les fils de coupe (5) s'étendent perpendiculairement au sens transversal de table (2b),
et dans lequel de préférence les fils de coupe (5) sont inclinés autour d'un axe horizontal perpendiculaire au sens de coupe (16) par rapport à la verticale, dans lequel les fils de coupe (5) s'étendent de préférence vu de bas en haut vers la table de coupe (2) et dans lequel les fils de coupe (5) forment en particulier avec le sens de coupe (16) un angle α, dans lequel s'applique : 30 ≤ α ≤ 80°, de préférence 40 ≤ α ≤ 50°.

9. Dispositif de coupe selon l'une des revendications 1 à 8,
**caractérisé en ce que**
la table de coupe (2) est en liaison entraînable de manière mobile alternativement avec les moyens d'entraînement dans le sens de coupe (16), dans lequel de préférence le cadre de coupe (4) est immobile.

10. Procédé de coupe d'un bloc de matériau isolant (3) durci en plusieurs plaques d'isolation (30),
**caractérisé en ce que**
un dispositif de coupe (1) selon l'une des revendications 1 à 9 est utilisé.

11. Procédé de fabrication de plaques d'isolation (30) monolithiques selon la technologie du béton poreux ou mousse avec les étapes de procédé suivantes :
a) versement de masse fraîche de matériau isolant dans un moule ouvert vers le haut,
b) raidissement et dans le cas de la fabrication selon la technologie du béton poreux, gonflement préalable de la masse fraîche en un gâteau de matériau isolant plastique résistant à la coupe,
c) coupe du gâteau de matériau isolant plastique en blocs de matériau isolant individuels (3),
d) durcissement hydrothermal des blocs de matériau isolant (3) coupés,
e) coupe des blocs de matériau isolant (3) durcis en plaques d'isolation individuelles (30) selon la revendication 10, dans lequel le dispositif de coupe coupe respectivement un bloc de matériau isolant (3) durci en plusieurs plaques d'isolation (30).

12. Procédé selon la revendication 11,
**caractérisé en ce que**
le gâteau de matériau isolant est coupé en blocs de matériau isolant (3) parallélépipédiques qui présentent respectivement une surface de pose de bloc (6) à surface plane, un côté supérieur de bloc (7) parallèle à celle-ci, deux surfaces latérales de bloc (8) perpendiculaires à la surface de pose de bloc (6), à surface plane opposées et deux surfaces avant de bloc (9) perpendiculaires aux surfaces latérales de bloc (8) et à la surface de pose de bloc (6).

13. Procédé selon la revendication 11 ou 12,
**caractérisé en ce que**
le gâteau de matériau isolant est coupé en blocs de matériau isolant (3) parallélépipédiques qui présentent respectivement une étendue longitudinale dans un sens longitudinal de bloc (3a) horizontal ainsi qu'un sens transversal de bloc (3b) perpendiculaire au sens longitudinal de bloc (3a) et un sens de hauteur de bloc (3c) perpendiculaire au sens longitudinal de bloc (3a) et au sens transversal de bloc (3b),
dans lequel les blocs de matériau isolant (3) présentent de préférence les dimensions suivantes :
| | | | en particulier | |
|---|---|---|---|---|
| Longueur | 1200 à 1800 | mm | 1270 à 1570 | mm |
| Largeur | 300 à 450 | mm | 360 à 400 | mm |
| Hauteur | 500 à 700 | mm | 600 à 650 | mm |
et dans lequel les blocs de matériau isolant (3) sont coupés en plaques de matériau isolant (30) parallélépipédiques qui présentent les dimensions suivantes de préférence :
| | | | en particulier | |
|---|---|---|---|---|
| Longueur | 500 à 700 | mm | 600 | mm |
| Largeur | 300 à 450 | mm | 390 | mm |
| Epaisseur | 30 à 350 | mm | 50 à 300 | mm |

14. Dispositif de fabrication de plaques d'isolation (30) selon la technologie du béton poreux ou mousse à l'aide du procédé selon l'une des revendications précédentes avec
a) un moule pour le remplissage de masse fraîche de matériau isolant,
b) un dispositif de coupe pour la coupe d'un gâteau de matériau isolant plastique, résistant à la coupe en blocs de matériau isolant (3),
c) des moyens pour le durcissement hydrothermal des blocs de matériau isolant (3) coupés, en particulier un autoclave,
d) un dispositif de coupe selon l'une des revendications 1 à 9 pour la coupe respectivement d'un bloc de matériau isolant (3) durci en plusieurs plaques d'isolation (30).
